# DEMANDE DE BREVET EUROPEEN

(11) **EP 0 803 402 A1**
(43) Date de publication de la demande: **29.10.1997**
(21) Numéro de dépôt: 97400903.7
(22) Date de dépôt: 22.04.1997
(51) Int. Cl.: B60Q 1/14

(54) **Commutateur électrique pour véhicules automobiles, notamment pour la commande d'éclairage comprenant des moyens pour éviter une interruption d'alimentation**

(30) Priorité: 24.04.1996 FR 9605156
(71) Demandeur: MAGNETI MARELLI FRANCE, 92000 Nanterre (FR)
(72) Inventeur: Vivier, Yves, 14480 Rucqueville (FR)
(74) Mandataire: Texier, Christian

(57) **Abrégé**

La présente invention concerne un commutateur électrique pour véhicules automobiles notamment pour la commande de feux d'éclairage permettant d'assurer une commutation entre les feux code et route du type comprenant un boîtier (10), une manette (20) montée à pivotement sur le boîtier (10), un coulisseau (30) guidé sur le boîtier (10) et entraîné à déplacement par la manette (20) et un actionneur (50) sollicité par le coulisseau (30) entre deux positions stables de commutation, caractérisé par le fait qu'il comprend des structures complémentaires (300, 500) associées au coulisseau (30) et à l'actionneur (50), interdisant un maintien de l'actionneur (50) dans une position instable intermédiaire entre les deux positions stables de commutation lorsque le coulisseau (30) est en position de repos.

## Description

La présente invention concerne le domaine des commutateurs électriques pour véhicules automobiles.

Plus précisément, la présente invention concerne les commutateurs électriques pour la commande d'éclairage, conçus pour assurer notamment une commutation entre un état d'activation en feux code ou ville, et un état d'activation en feux route.

De nombreux commutateurs électriques à cet effet ont déjà été proposés.

En particulier, on a déjà propopsé de nombreux commutateurs du type illustré sur les figures 1, 2 et 3 annexées.

Sur ces figures, les figures 1 et 2 représentent deux vues en coupe, orthogonales entre elles, d'un commutateur électrique classique conforme à l'état de la technique, et la figure 3 représente une vue schématique de détail d'une bascule de contact utilisée dans un tel commutateur.

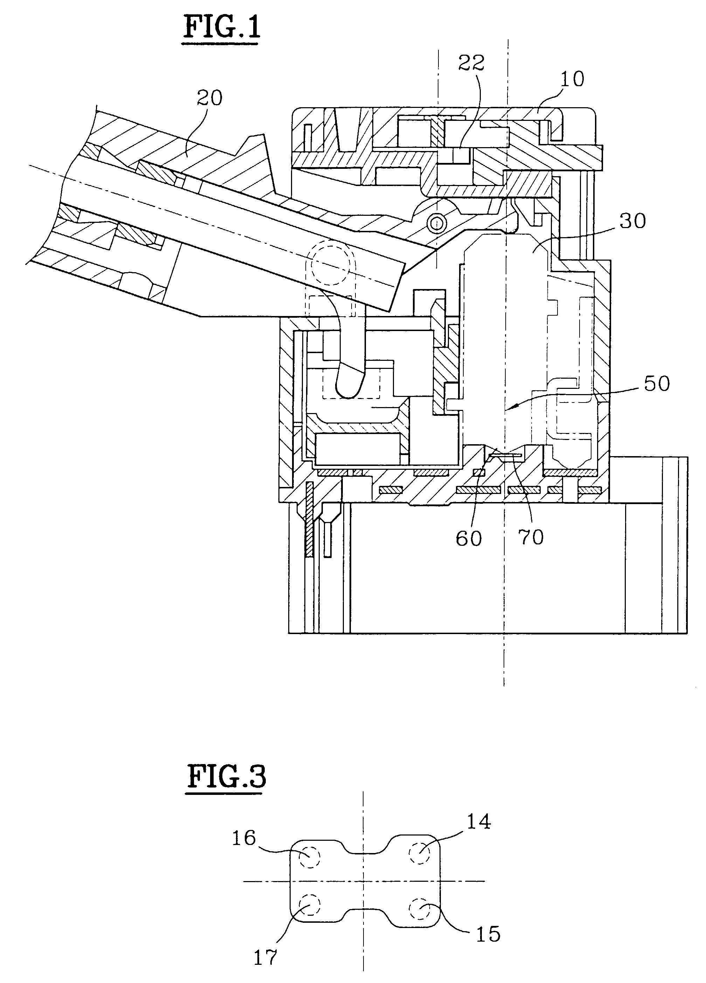

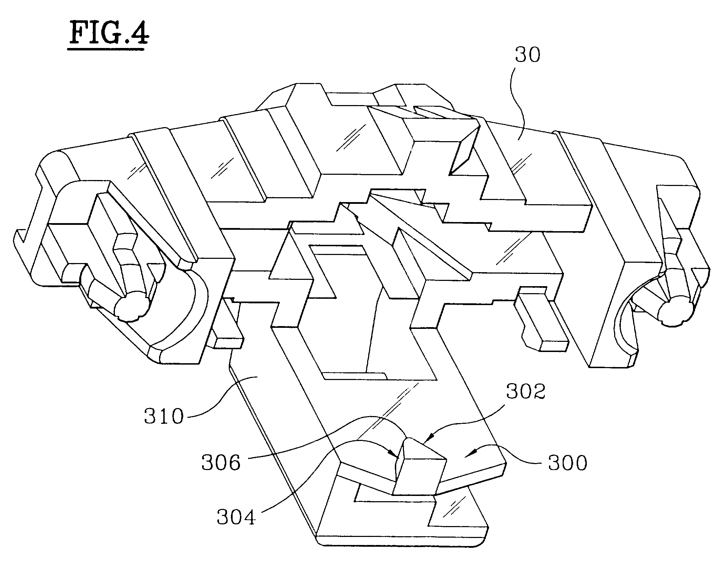

Les commutateurs électriques connus du type illustré sur les figures 1 à 3 comprennent essentiellement un boîtier 10, une manette 20, un coulisseau de commande 30 équipé d'un doigt de commande 40, et un actionneur 50.

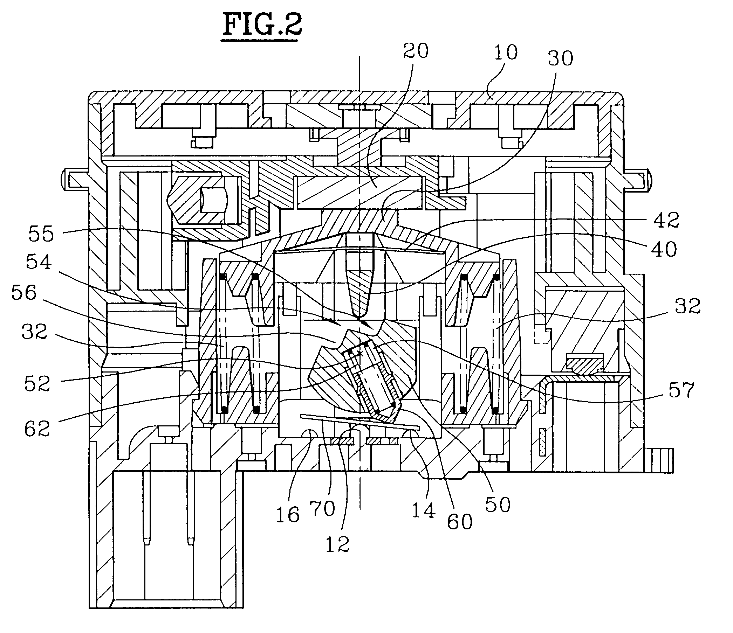

La manette 20 peut assurer différentes fonctions. Dans le cadre de la fonction qui intéresse la présente invention, la manette 20 est montée à pivotement sur le boîtier 10 autour d'un axe 22 perpendiculaire au plan de la figure 1 et parallèle au plan de la figure 2.

Le coulisseau de commande 30 est monté à translation dans le boîtier 10 parallèlement au plan des figures 1 et 2. Le coulisseau de commande 30 est actionné par la manette 20 lors de son pivotement. Le coulisseau de commande 30 est rappelé dans la position de repos illustré sur les figures 1 et 2 par des ressorts 32.

Le coulisseau de commande 30 est adapté pour agir sur l'actionneur 50. Il s'agit de préférence d'un actionneur 50 guidé à pivotement oscillant sur le boîtier 10 autour d'un axe 52 perpendiculaire au plan de la figure 2 et parallèle au plan de la figure 1, entre deux positions de travail.

A cet effet, le coulisseau 30 est équipé du doigt 40. Celui-ci s'étend dans la direction générale de translation du coulisseau 30 en direction de l'actionneur 50. Le doigt 40 est retenu sur le coulisseau 30 par une lame élastique 42. La lame élastique 42 autorise ainsi des débattements angulaires du doigt 40 par rapport au coulisseau 30 lorsque le doigt 40 vient contacter l'actionneur 50.

Par ailleurs, l'actionneur 50 est muni d'une came d'inversion 54 apte à coopérer avec le doigt 40. Plus précisément, la came d'inversion 54 est formée de préférence de deux dièdres concaves 55, 56 symétriques par rapport à un plan passant par l'axe de pivotement 52. Les dièdres 55, 56 sont placés sur une face de l'actionneur 50 dirigée vers le doigt 40. Ainsi, les dièdres 55, 56 sont placés alternativement en regard de l'extrémité du doigt 40 en fonction de la position angulaire de l'actionneur 50.

En outre, l'actionneur 50 est muni d'un poussoir d'indexage 60. Celui-ci est placé dans un logement borgne 57 de l'actionneur qui débouche sur la face de celui-ci opposée à la came d'inversion 54. Le poussoir d'indexage 60 est sollicité vers l'extérieur de l'actionneur 50 par un ressort 62 placé dans le fond de l'alésage 57.

Le poussoir d'indexage 60 coopère avec une bascule de contact 70. Celle-ci est placée sur le côté de l'actionneur 50 opposé au coulisseau 30. La bascule de contact 70 est formée de préférence d'une palette électriquement conductrice, par exemple en métal, qui s'étend dans une direction générale transversale à la direction de translation du coulisseau 30 et repose sur un pion support 12 solidaire du boîtier 10.

Le boîtier 10 porte par ailleurs, en regard des extrémités de la bascule 70, deux paires de plots respectivement 14, 15 d'une part, et 16, 17 d'autre part.

Ainsi, les pivotements successifs de la manette 20 autour de l'axe 22 entraînent, par translation du coulisseau 30, des basculements de l'actionneur 50 qui provoquent eux-mêmes des pivotements de la bascule 70 de sorte que celle-ci relie alternativement les plots 14 et 15 ou les plots 16 et 17. Ainsi, on alimente successivement les filaments phare des moyens d'éclairage lorsque les plots 14 et 15 sont reliés et les filaments code ou ville des moyens d'éclairage lorsque les plots 16 et 17 sont reliés.

La structure de ce commutateur est classique en elle-même et elle ne sera donc pas décrite plus en détail par la suite.

De nombreux commutateurs du type illustré sur les figures 1 à 3 ont déjà été commercialisés.

Cependant, il s'avère que ces commutateurs posent, dans certaines conditions, un problème important : il arrive que l'actionneur 50 et la bascule 70 sous-jacente restent dans une position intermédiaire entre les positions stables de travail précitées, positions intermédiaires dans laquelle ni les plots 14 et 15, ni les plots 16 et 17 sont reliés entre eux, de sorte qu'aucun des filaments phare ou code n'est alimenté. Ce phénomène est dénommé généralement "trou noir" puisqu'il correspond à une absence totale d'éclairage.

Un tel phénomène peut être rencontré notamment lorsque l'utilisateur actionne doucement la manette 10 pour inversion code/phare mais relache la manette 10 avant que le mouvement soit terminé de sorte que l'actionneur 50 reste dans une position d'équilibre provisoire intermédiaire.

La présente invention a maintenant pour but de perfectionner ces commutateurs électriques.

Ce but est atteint selon la présente invention gràce à un commutateur électrique du type connu comprenant un boîtier, une manette montée à pivotement sur le boîtier, un coulisseau de commande guidé sur le boîtier et entraîné à déplacement par la manette et un actionneur sollicité par le coulisseau entre deux positions stables de commutation électrique, caractérisé par le fait qu'il comprend en outre des structures complémentaires associées à l'actionneur et au coulisseau, interdisant un maintien de l'actionneur en position instable intermédiaire entre les deux positions stables de commutation, lorsque le coulisseau est placé en position de repos.

D'autres caractéristiques, buts et avantages de la présente invention apparaîtront à la lecture de la description détaillée qui va suivre et en regard des dessins annexés donnés à titre d'exemple non limitatif et sur lesquels :
- les figures 1 à 3 précédemment décrites représentent un commutateur électrique conforme à l'état de la technique,
- la figure 4 représente une vue schématique en perspective d'un coulisseau de commande conforme à la présente invention,

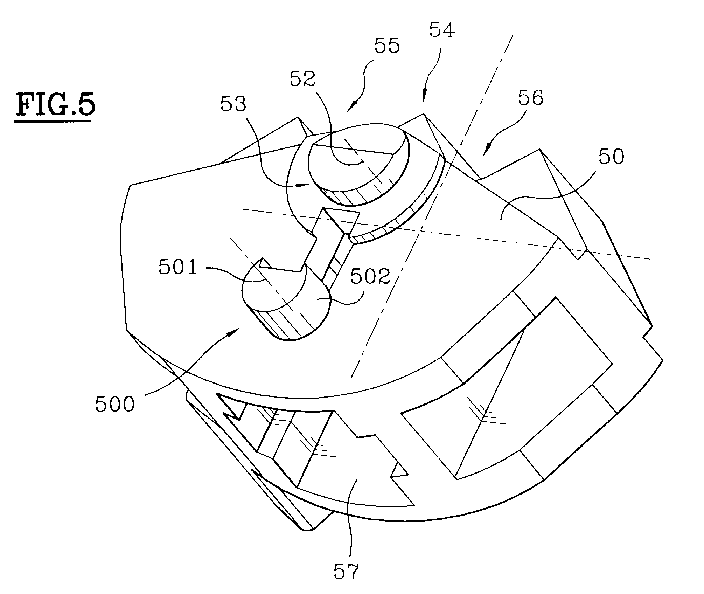

- la figure 5 représente une vue en perspective d'un actionneur conforme à la présente invention, et

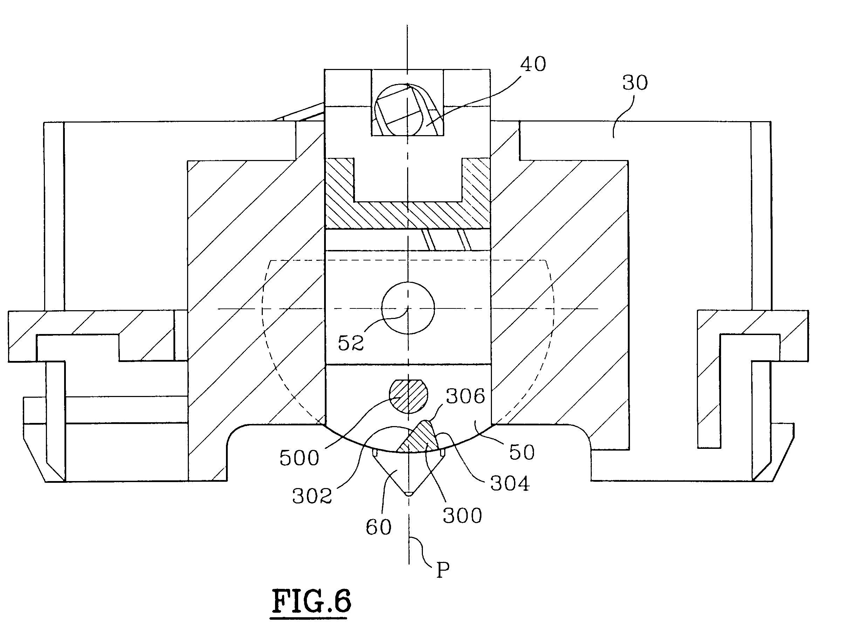

- la figure 6 schématise la coopération d'un coulisseau de commande et d'un actionneur conformes à la présente invention.

La structure générale des commutateurs électriques auxquels s'applique l'invention ne sera pas décrite dans le détail par la suite dans la mesure où, d'une part elle est connue en elle-même et, d'autre part elle a été rappelée ci-dessus dans sa configuration fondamentale en regard des figures 1 à 3 annexées.

Par la suite, on s'attachera par conséquent essentiellement à décrire les caractéristiques innovantes apportées au coulisseau de commande 30 et à l'actionneur 50.

Comme on l'a évoqué précédemment, selon l'invention il est prévu des structures complémentaires 300, 500 associées respectivement au coulisseau de commande 30 et à l'actionneur 50 pour interdire un maintien de l'actionneur 50 dans une position intermédiaire entre les deux positions stables de commutation lorsque le coulisseau 30 est placé en position de repos.

Il peut s'agir de structures 300, 500 placées dans le plan de symétrie respectivement du coulisseau de commande 30 et de l'actionneur 50. Cependant de préférence l'une au moins de ces structures 300 et 500 est dissymétrique par rapport au coulisseau de commande 30 et à l'actionneur 50.

En outre, selon une autre caractéristique avantageuse de l'invention, les structures 300 et 500 sont délimitées par des surfaces globalement arrondies.

Plus précisément encore, selon le mode de réalisation particulier et non limitatif illustré sur les figures annexées, la structure 500 prévue sur l'actionneur 50 est constituée d'un pion essentiellement cylindrique de révolution centré sur un axe 501 parallèle à l'axe 52 de pivotement de cet actionneur.

Sur la figure 5, la surface extérieure convexe cylindrique de révolution de ce pion 500, susceptible d'être sollicitée par la structure associée 300 prévue sur le coulisseau 30 est référencée 502.

De préférence, ce pion 500 est prévu sur une face latérale de l'actionneur 50 proche de la bascule 70, c'est-à-dire sur le côté de l'axe de pivotement 52 opposé au coulisseau de commande 30.

En variante, il peut être prévu deux pions 500 coaxiaux respectivement sur les deux faces latérales de l'actionneur 50, coopérant respectivement avec des structures associées 300 prévues sur le coulisseau 30.

Sur la figure 5, on aperçoit l'alésage 57 recevant le poussoir d'indexage 60, la came d'inversion 54 formée de deux dièdres 55, 56 et un tourillon 53 matérialisant l'axe de pivotement 52.

Par ailleurs, la structure 300 prévue sur le coulisseau de commande 30 a de préférence la forme générale d'un coin en forme de dièdre à sommet arrondi.

Sur les figures 4 et 6, les deux faces principales de ce dièdre 300 sont référencées 302, 304 et le sommet du dièdre 306.

Ce sommet arrondi 306 est dirigé vers le pion 500. L'angle d'ouverture du coin 300 est avantageusement de l'ordre de 35°.

Comme on le notera à l'examen notamment de la figure 6, de préférence le coin 300 est non symétrique par rapport au plan médian P du coulisseau 30 parallèle à sa direction de translation.

En particulier, le sommet arrondi 306 du coin 300 est décalé latéralement par rapport à ce plan P. Ainsi, lorsque l'actionneur 50 est placé en position intermédiaire provisoire symétrique par rapport à ses deux positions de travail, le coin 300 contacte le pion 500 par l'un de ses flancs 302 et non point par son sommet arrondi 306. Cette disposition permet de garantir que le coin 300 ne reste pas accroché sur le pion 500, mais exerce bien, par l'intermédiaire du flanc 302 un couple de pivotement de l'actionneur 50 autour de l'axe 52.

On notera que le coin 300 est prévu à l'extrémité d'un poutre 310 solidaire du coulisseau de commande 30 et généralement parallèle à la direction de translation de celui-ci, de sorte que le coin 300 soit placé entre le pion 500 et la bascule 70 lorsque le coulisseau de commande 30 est déplacé par la manette 20. Bien entendu les encombrements du pion 500 et du coin 300 doivent être adaptés de telle sorte que le pion 500 n'interfère pas avec le trajet à translation du coin 300 lorsque l'actionneur 50 est placé dans l'une de ses positions de travail stables, mais qu'en revanche, le pion 500 interfère avec ce trajet en déplacement du coin 300, dès lors que l'actionneur 50 est placé dans une position intermédiaire.

En outre, il est nécessaire que le coin 300 ait franchi la zone en couronne de déplacement du pion 500 avant que le doigt 40 porté par le coulisseau de commande 30 ne vienne solliciter la came d'inversion 54. Ainsi, le coin 300 ne vient contacter le pion 500, si l'actionneur 50 est placé dans une position intermédiaire instable, que seulement au cours de sa course de retour vers la position de repos sous l'effet de la sollicitation des ressorts 32.

Bien entendu la présente invention n'est pas limitée au mode de réalisation particulier qui vient d'être décrit, mais s'étend à toute variante conforme à son esprit.

En particulier, on peut prévoir de disposer une structure 300 symétrique sur le coulisseau de commande 30 et une structure 500 dissymétrique sur l'actionneur 50. De même, on peut prévoir de disposer une forme en coin 500 sur l'actionneur 50 et une structure 300 cylindrique de révolution sur le coulisseau de commande 30.

## Revendications

1. Commutateur électrique pour véhicules automobiles notamment pour la commande de feux d'éclairage permettant d'assurer une commutation entre les feux code et route du type comprenant un boîtier (10), une manette (20) montée à pivotement sur le boîtier (10), un coulisseau (30) guidé sur le boîtier (10) et entraîné à déplacement par la manette (20) et un actionneur (50) sollicité par le coulisseau (30) entre deux positions stables de commutation, caractérisé par le fait qu'il comprend des structures complémentaires (300, 500) associées au coulisseau (30) et à l'actionneur (50), interdisant un maintien de l'actionneur (50) dans une position instable intermédiaire entre les deux positions stables de commutation lorsque le coulisseau (30) est en position de repos.

2. Commutateur selon la revendication 1, caractérisé par le fait que l'une au moins des structures (300, 500) est non symétrique par rapport à un plan médian de l'élément associé.

3. Commutateur selon l'une des revendications 1 ou 2, caractérisé par le fait que la structure (300) prévue sur le coulisseau de commande (30) est non symétrique par rapport au coulisseau (30).

4. Commutateur selon l'une des revendications 1 à 3, caractérisé par le fait que l'une des structures (500) est cylindrique de révolution.

5. Commutateur selon l'une des revendications 1 à 4, caractérisé par le fait que l'une des structures (300) est en forme de coin définie par un dièdre (302, 304) à sommet (306) arrondi.

6. Commutateur selon l'une des revendications 1 à 5, caractérisé par le fait que l'actionneur (50) comprend une structure (500) cylindrique de révolution et symétrique tandis que le coulisseau de commande (30) comprend une structure (300) en forme de coin dissymétrique.

7. Commutateur selon l'une des revendications 1 à 6, caractérisé par le fait qu'il comprend deux structures (300, 500) sur les faces latérales respectivement de chacun du coulisseau de commande (30) et de l'actionneur (50).

8. Commutateur selon l'une des revendications 1 à 7, caractérisé par le fait que l'actionneur (50) est monté à pivotement sur le boîtier (10) et possède une came d'inversion (54) définie par deux dièdres (55, 56) qui coopèrent avec un doigt (40) lié avec possibilité de débattement au coulisseau (30).

9. Commutateur selon l'une des revendications 1 à 8, caractérisé par le fait qu'il comprend en outre une bascule de contact (70) entraînée par l'actionneur (50) pour relier alternativement des paires de contacts électriques (14, 15 et 16, 17).
